# EUROPÄISCHE PATENTSCHRIFT

(11) **EP 3 018 780 B1**
(45) Veröffentlichungstag und Bekanntmachung des Hinweises auf die Patenterteilung: **01.07.2020**
(21) Anmeldenummer: 15193430.4
(22) Anmeldetag: 06.11.2015
(51) Int. Cl.: H02G 15/013, F21V 5/00, F21V 23/06

(54) **ELEKTRISCHES ANSCHLUSSKABEL FÜR LEUCHTENMODUL**
ELECTRICAL CONNECTION CABLE FOR LAMP MODULE
CABLE DE RACCORDEMENT POUR UN MODULE D'ECLAIRAGE

(30) Priorität: 10.11.2014 DE 102014116387
(43) Veröffentlichungstag der Anmeldung: 11.05.2016
(73) Patentinhaber: SITECO GmbH, 83301 Traunreut (DE)
(72) Erfinder: Leistner, Michael, 84558 Kirchweidach (DE); Loipfinger, Mathias, 83329 Waging am See (DE); Oberhofer, Peter, 83352 Altenmarkt (DE)
(74) Vertreter: Schmidt, Steffen

(56) Entgegenhaltungen:
- WO-A1-2013/021017
- DE-A1- 10 350 724
- GB-A- 2 323 483

## Beschreibung

Die vorliegende Erfindung betrifft ein elektrisches Anschlusskabel für ein Leuchtenmodul, insbesondere zur Energieversorgung oder zum Anschluss von Steuerleitungen für das Leuchtenmodul, sowie ein entsprechendes Leuchtenmodul mit Anschlusskabel.

Aus dem Stand der Technik sind Leuchtvorrichtungen bekannt, welche mit einer elektrischen Leitung derart verbunden sind, dass die Durchführung des Kabels in ein Leuchtengehäuse vollständig abgedichtet ist. Ein Beispiel einer solchen Leuchtvorrichtung mit einer elektrischen Leitung ist in der DE 10 2011 075 032 A1 beschrieben.

Dieser Stand der Technik hat jedoch den Nachteil, dass das Anschlusskabel fest mit dem Leuchtenmodul verbunden ist. Es lässt sich daher auch zu Wartungsarbeiten nicht abnehmen.

Aus der DE 10 2010 033 297 A1 ist eine Beleuchtungsvorrichtung mit einem Dichtelement vorgesehen. Um eine Kabeldurchführung in einem Leuchtengehäuse abzudichten, weist die Kabeldurchführung eine Gummidichtung auf, die an einem Umfang des Kabels selbst anliegt. Die Montage und Demontage des Anschlusskabels ist bei dieser Konstruktion jedoch verhältnismäßig aufwendig und kann in der Regel nur von Hand durchgeführt werden.

DE 103 50 724 A1 offenbart eine elektrische Anschlussleitung mit einem Stecker, in welchem eine Platine mit Steckkontakten eingegossen ist.

WO 2013/021017 A1 offenbart eine elektrische Vorrichtung mit einem Dichtungselement, welche an ein Gehäuse eines LED-Leuchtenmoduls angeschlossen ist. Das Dichtungselement umfasst einen gummielastischen Körper, welcher auf eine Anschlussleitung aufgesteckt ist. Der gummielastische Körper wird mit einer Nut in eine Seitenwand des Leuchtengehäuses eingesteckt und mit einem Deckel auf der gegenüberliegenden Seite fixiert.

GB 2 323 483 A offenbart eine elektrische Anschlussleitung gemäß dem Oberbegriff des Anspruchs 1.

Aufgabe der vorliegenden Erfindung ist es, ein elektrisches Anschlusskabel für ein Leuchtenmodul sowie ein Leuchtenmodul mit entsprechendem Anschlusskabel bereitzustellen, welches einfach montiert werden kann, insbesondere für eine automatisierte Montage geeignet ist, und außerdem das Leuchtenmodul im Bereich der Kabeldurchführung abdichtet.

Gelöst wird die Aufgabe durch ein elektrisches Anschlusskabel gemäß Anspruch 1 sowie durch ein Leuchtenmodul mit elektrischem Anschlusskabel nach Anspruch 11.

Das elektrische Anschlusskabel sieht am leuchtennahen Ende einen speziellen Adapterstecker vor, welcher direkt an einer Öffnung des Leuchtengehäuses des Leuchtenmoduls montiert werden kann und dabei auch eine Abdichtung des Leuchtenmoduls im Bereich der Öffnung ermöglicht. Der Adapterstecker ist aus einer kleinen Platine und einem Steckergehäuse aufgebaut, wobei die Platine mit dem Steckergehäuse durch ein Vergussmaterial verbunden werden, welches gleichzeitig dafür sorgt, dass die Platine mit dem Steckergehäuse abgedichtet wird. Die Einheit aus Platine und Steckergehäuse ist fest mit einer, vorzugsweise wenigstens zwei Adern des elektrischen Anschlusskabels verbunden. Das Vergussmaterial ist auch dafür vorgesehen, die Adern des elektrischen Anschlusskabels in dem Adapterstecker dicht einzugießen. Das Vergussmaterial kann auf diese Weise auch für eine Zugentlastung des elektrischen Kabels sorgen. Das Vergussmaterial hat also die Aufgabe, den Adapterstecker mechanisch zusammenzuhalten, das Kabel mechanisch zu halten und den Adapterstecker einschließlich des Kabels insgesamt abzudichten. Vorzugsweise ist nicht die gesamte Platine mit Vergussmaterial abgedeckt. Insbesondere sind die eine oder die mehreren zweiten Kontaktstellen frei von Vergussmasse.

Der Adapterstecker wird in der Öffnung des Leuchtenmoduls befestigt. Anschließend können von der Innenseite des Leuchtenmoduls elektrische Komponenten, wie eine Platine, welche Leuchtmittel des Leuchtenmoduls trägt, mit einem elektrischen Kabel an der zweiten Kontaktstelle, wovon vorzugsweise zwei oder mehr vorhanden sind, angeschlossen werden.

Gemäß einer bevorzugten Ausführungsform weist das Steckergehäuse einen Flansch auf, welcher im am Leuchtemodul montierten Zustand des Anschlusskabels an einem Umfang der Öffnung des Leuchtemoduls an einer Außen- oder Innenseite des Leuchtemoduls anliegt. Der Flansch kann dazu dienen, das Leuchtemodul mit dem Adapterstecker im Bereich der Öffnung abzudichten. Der Flansch kann von der Innen- oder Außenseite an dem Wandabschnitt im Bereich des Umfangs der Öffnung in dem Leuchtenmodul anliegen, abhängig davon, ob die Konstruktion vorsieht, den Adapterstecker von innen nach außen oder von außen nach innen in der Öffnung des Leuchtenmoduls zu befestigen. Beide Möglichkeiten sind im Rahmen der Erfindung berücksichtigt. Bevorzugt ist die Montage von außen nach innen, weil die Rastverbindungen zum Halten des Adaptersteckers dann auf der Innenseite liegen, wo sie nicht unbeabsichtigt geöffnet werden können.

Gemäß einer bevorzugten Ausführungsform weist der Adapterstecker eine Dichtung auf, welche den Adapterstecker zu der Innen- oder Außenseite des Leuchtenmoduls abdichtet. Insbesondere in Verbindung mit der Ausführungsform, in welcher der Adapterstecker einen Flansch vorsieht, kann die Dichtung durch einen O-Ring gebildet werden, welcher vorzugsweise in einer Nut des Adaptersteckers entlang des Flansches angeordnet ist.

Gemäß einer bevorzugten Ausführungsform sind die Mittel zur Befestigung des Adaptersteckers in der Öffnung durch Rastmittel gebildet, welche im Bereich der Öffnung des Leuchtenmoduls einrastbar sind. Diese Verbindungsart ist besonders einfach. Insbesondere bei einer vollautomatisierten Montage kann der Adapterstecker durch die Rastmittel leicht in der Öffnung des Leuchtenmoduls befestigt werden.

Erfindungsgemäß umfasst das Steckergehäuse einen Einschubschlitz, in welchem die Platine eingeschoben ist. Ferner weist die Platine und das Steckergehäuse Rastmittel auf, welche die Platine in dem Einschubschlitz halten, bevor die Platine an dem Steckergehäuse durch das Vergussmaterial befestigt und abgedichtet wird. Dieser Aufbau erleichtert die Montage des Anschlusssteckers. Der Einschubschlitz sorgt dafür, dass die Platine präzise gegenüber dem Steckergehäuse platziert wird. Die Rastmittel sorgen dafür, dass der Adapterstecker bereits vorläufig zusammengehalten wird, bevor das Vergussmaterial sich verfestigt. Vorzugsweise wird ein Vergussmaterial verwendet, welches nach dem Verfestigen eine restliche Zähigkeit behält.

Gemäß einer bevorzugten Ausführungsform ist die wenigstens zweite Kontaktstelle durch eine Anschlussklemme, insbesondere eine "BJB-Klemme" gebildet. In der Anschlussklemme kann ein leuchtenseitiges Kabel für die Verbindung mit elektrischen Komponenten innerhalb des Leuchtenmoduls, wie z.B. eine mit Leuchtmitteln besetzten Platine einfach mechanisch gehalten und elektrisch kontaktiert werden. Vorzugsweise sind wenigstens zwei derartige Anschlussklemmen für zwei zweite Kontaktstellen vorgesehen.

Gemäß einer bevorzugten Ausführungsform weist die wenigstens eine, vorzugsweise mehr als eine, erste Kontaktstelle eine Lötstelle auf. Die wenigstens eine elektrische Ader des elektrischen Anschlusskabels wird durch Verlöten an der ersten Kontaktstelle der Platine des Adaptersteckers angebracht. Diese Verbindung lässt sich maschinell leicht herstellen und ist bevorzugt, da sie auch zur Wartung des Leuchtenmoduls nicht wieder geöffnet werden braucht. Die Lötstelle kann insbesondere vollständig von dem Vergussmaterial eingegossen sein.

Gemäß einer bevorzugten Ausführungsform ist an dem leuchtenentfernten Ende der elektrischen Anschlussleitung ein Stecker vorgesehen, der vorzugsweise durch Krimpen an der wenigstens einen Ader der elektrischen Leitung befestigt und elektrisch kontaktiert wird. Gemäß einer Ausführungsform der Erfindung muss das offene Ende des elektrischen Anschlusskabels zunächst durch das Steckergehäuse des Adaptersteckers hindurchgeführt werden, bevor die Platine des Adaptersteckers in dem Steckergehäuse befestigt wird. In diesem Arbeitsschritt ist es von Vorteil, dass noch kein Stecker am leuchtenentfernten Ende des elektrischen Anschlusskabels angebracht ist. Dieser wird erst in einem nachfolgenden Schritt befestigt. Dazu eignet sich insbesondere Krimpen, wobei andere Verbindungsarten, wie z.B. Löten auch möglich sind.

Das Leuchtenmodul der vorliegenden Erfindung umfasst eine elektrische Anschlussleitung wie vorhergehend beschrieben, sowie ein Modulgehäuse, in welcher die Öffnung vorgesehen ist, in der der Adapterstecker montiert ist, und eine Platine, an welcher Leuchtmittel angeordnet sind, wobei die Platine mit den Leuchtmitteln elektrisch mit der wenigstens einen zweiten Kontaktstelle des Adaptersteckers verbunden ist. Das Leuchtenmodul keinen eine vollständige Leuchte sein, oder nur ein Teil einer Leuchte mit eigenem Gehäuse, wobei Komponenten der Leuchte, wie z.B. ein Vorschaltgerät, extern angeordnet sein können.

Als Leuchtmittel sind LEDs bevorzugt. Die elektrische Anschlussleitung der beschriebenen Ausführungsformen, eignet sich insbesondere für die zur Versorgung von LEDs erforderlichen Spannungen.

Gemäß einer bevorzugten Ausführungsform ist das Leuchtenmodul mit dem daran montierten elektrischen Anschlusskabel, d.h. mit eingestecktem Adapterstecker, feuchtigkeitsdicht oder gasdicht ausgebildet. Es können insbesondere die Schutzklassen IP 65 oder IP 66 realisiert werden.

Weitere Merkmale und Vorteile der vorliegenden Erfindung werden aus der nachfolgenden Beschreibung einer bevorzugten Ausführungsform deutlich, die in Verbindung mit den beigefügten Figuren gegeben wird. In den Figuren ist Folgendes dargestellt:
- Figur 1: zeigt ein elektrisches Anschlusskabel in Explosionsdarstellung.
- Figur 2: zeigt das elektrische Anschlusskabel in einer Seitenansicht.
- Figur 3: zeigt das elektrische Anschlusskabel in einer Aufsicht.
- Figur 4: zeigt das elektrische Anschlusskabel im Bereich des Adaptersteckers in einem Querschnitt.
- Figur 5: zeigt ein Leuchtenmodul in Explosionsdarstellung.
- Figur 6: zeigt einen Ausschnitt des Leuchtenmoduls in Aufsicht mit montiertem elektrischem Anschlusskabel.

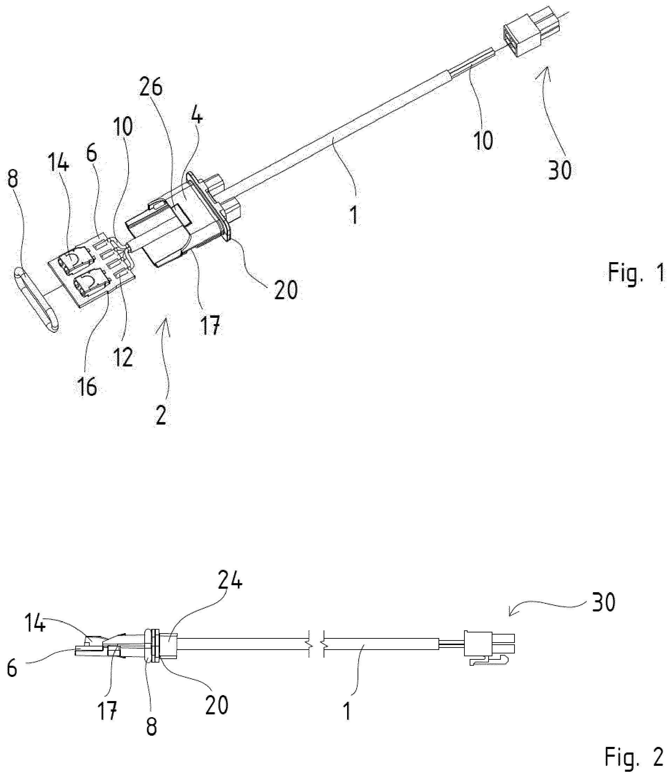

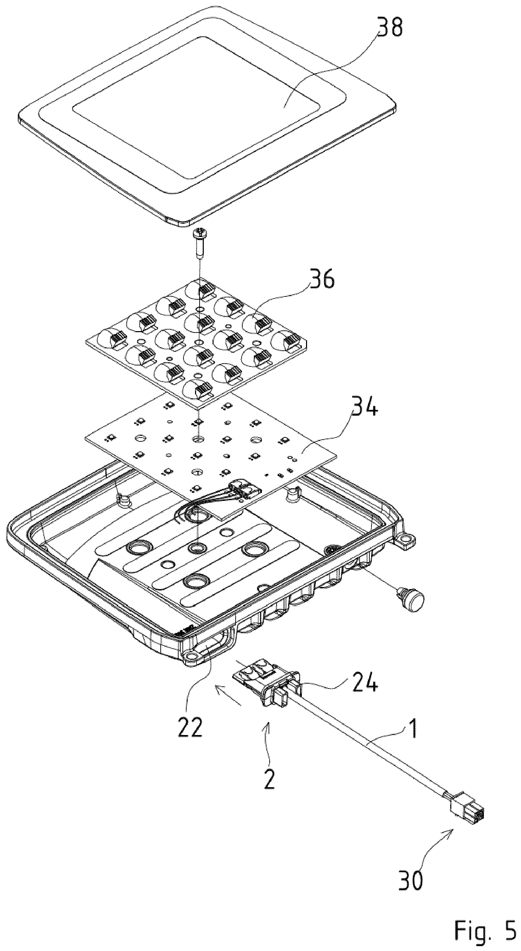

Bezug nehmend auf Figur 1 ist der Aufbau eines elektrischen Anschlusskabels dargestellt, welches für ein Leuchtenmodul, wie in der Figur 5 dargestellt ist, vorgesehen ist.

Das elektrische Anschlusskabel umfasst ein leuchtennahes Ende (in Figur 1 bis 3 links) und ein leuchtenentferntes Ende (in Figuren 1 bis 3 rechts).

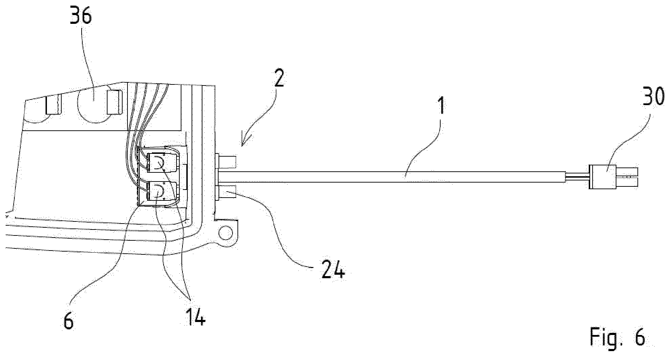

Am leuchtennahen Ende ist ein Adapterstecker 2 vorgesehen, welcher ein Steckergehäuse 4 und eine Platine 6 sowie einen O-Ring 8 umfasst. Zur Montage des Adaptersteckers 2 werden zunächst einzelne Adern 10 einer elektrischen Leitung 1 an ersten Kontaktstellen 12 der Platine 6 angelötet. Die ersten elektrischen Kontaktstellen 12 stehen über Leiterbahnen auf der Platine 6 in Verbindung mit zweiten elektrischen Kontaktstellen 14 in Form von Klemmen, in welchen elektrische Leitungen im Leuchtemodul angeklemmt werden können (siehe Figur 6).

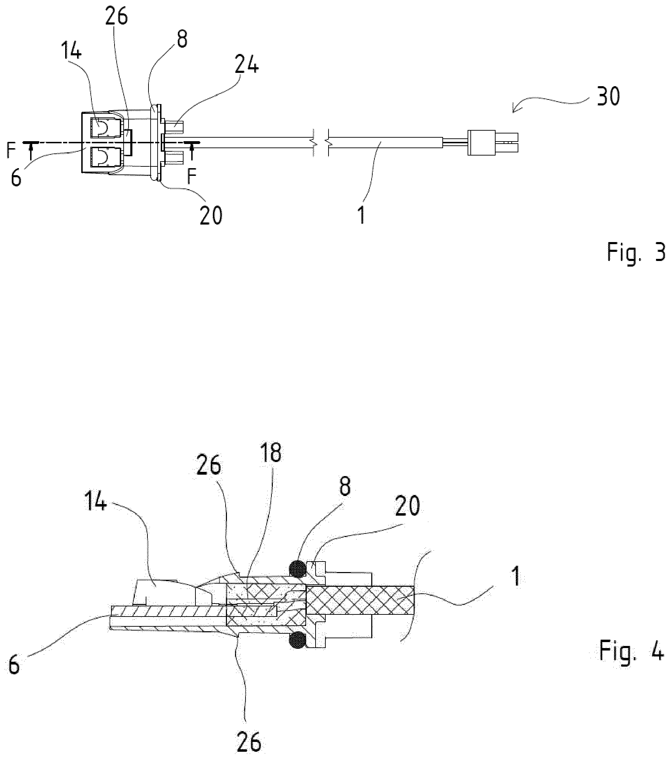

Nachdem die Adern 10 an den ersten Kontaktstellen 12 der Platine 6 angelötet sind, wird die elektrische Leitung 1 durch das Steckergehäuse 4 hindurch geführt und die Platine in einen Einschubschlitz des Steckergehäuses 4 eingeschoben. An den Längsseiten der Platine 6 sind Rastvorsprünge 16 vorgesehen, welche in seitlichen Fenstern 17 im Einschubschlitz des Gehäusesteckers 4 einrasten. In diesem Zustand hält der Adapterstecker 4 bereits zusammen. Zur Abdichtung und Fixierung des Adaptersteckers 2 wird eine Vergussmasse im Bereich der Platine 6 und des Steckergehäuses 4 aufgebracht, wie durch den schraffierten Bereich 18 in Figur 4 dargestellt. Die Vergussmasse 18 hält nicht nur die Platine 6 an dem Steckergehäuse 4 fest, sondern sorgt außerdem für eine Abdichtung, so dass keine Feuchtigkeit und/oder kein Gas durch den Adapterstecker 4 selbst hindurchdringen kann.

Das Steckergehäuse 4 weist ferner einen Flansch 20 auf, der sich in einer Ebene senkrecht zur Längserstreckung der elektrischen Leitung 1 erstreckt. Der Flansch 20 ist dafür bestimmt, mit dem O-Ring 8 zusammen an dem Umfang einer Öffnung 22 in dem Leuchtenmodul anzuliegen. Wie mit dem Pfeil in Figur 5 dargestellt, wird dazu der Adapterstecker 2 in die Öffnung 22 des Leuchtenmoduls eingeschoben. Der O-Ring 8 wird dabei zwischen dem Flansch und der äußeren Wand des Leuchtenmoduls eingeklemmt, so dass eine Dichtung erzielt wird. An der in Richtung zum leuchtenentfernten Ende weisenden Seite des Flansches sind zwei Pins 24 vorgesehen, an denen der Adapterstecker durch einen Roboter leicht ergriffen werden kann, um ihn in die Öffnung 22 des Leuchtenmoduls automatisch einzufügen.

Der Adapterstecker 2 weist im Bereich des Steckergehäuses 4 Rastvorsprünge 26 auf, welche auf der Innenseite des Leuchtenmoduls hinter der Öffnung 22 einrasten. Dadurch wird der Adapterstecker 2 mechanisch in der Öffnung 22 gehalten.

Nachdem der Adapterstecker 2 in dem Leuchtenmodul montiert ist, können auf der Innenseite elektrische Leitungen an die Anschlussklemmen der zweiten Kontaktstellen 14 angeschlossen werden, wie in Figur 6 gezeigt ist. Da die Anschlussklemmen den Draht gleichzeitig elektrisch kontaktieren und mechanisch halten, kann auch dieser Anschluss automatisiert durch einen Roboter vorgenommen werden.

An dem dem Leuchtenmodul entgegensetzten Ende des elektrischen Anschlusskabels ist ein weiterer Stecker 30 vorgesehen, um das Leuchtenmodul an eine elektrische Stromversorgung anzuschließen. Vorzugsweise ist ein Stecker 30 vorgesehen, bei welchem elektrische Pins des Steckers 30 direkt an die Adern 10 der elektrischen Leitung 1 angekrimpt werden und ein Kunststoffgehäuse über die elektrischen Pins geschoben wird.

Im Inneren des Leuchtenmoduls ist eine Platine 34 vorgesehen, auf der eine Vielzahl von Leuchtmitteln in Form von LEDs angebracht sind. Oberhalb der LEDs sind Linsenelemente 31 in einer Ebene angeordnet, die auf der Platine 34 befestigt werden. Das Leuchtenmodul wird von der Lichtaustrittsseite des Moduls durch eine transparente Abdeckung 38 verschlossen.

### Bezugszeichenliste:

- 1: Elektrische Leitung
- 2: Adapterstecker
- 4: Gehäusestecker
- 6: Platine
- 8: O-Ring
- 10: Ader der elektrischen Anschlussleitung
- 12: Erste Kontaktstelle
- 14: Zweite Kontaktstelle, insbesondere mit Anschlussklemme
- 16: Rastvorsprünge an der Platine
- 17: Fenster im Steckgehäuse
- 18: Vergussmasse
- 20: Flansch
- 22: Öffnung im Leuchtenmodul
- 24: Pin
- 26: Rastmittel im Steckergehäuse
- 30: Stecker
- 34: Platine mit Leuchtmitteln
- 36: Linsenelemente
- 38: transparente Abdeckung des Leuchtenmoduls

## Patentansprüche

1. Elektrische Anschlussleitung für die Montage in einer Öffnung (22) eines Leuchtenmoduls, wobei die Anschlussleitung Folgendes umfasst:
eine elektrische Leitung (1) mit einem leuchtennahen Ende und einem leuchtenentfernten Ende; und
einen Adapterstecker (2) an dem leuchtennahen Ende der elektrischen Leitung,
wobei der Adapterstecker
eine Platine (6), die wenigstens eine erste Kontaktstelle (12) aufweist, an der eine Ader (10) der elektrischen Leitung angeschlossen ist, und wenigstens eine zweite Kontaktstelle (14) aufweist, die über die Platine (6) in elektrischer Verbindung mit der ersten Kontaktstelle (12) steht und an der eine elektrische Leitung in einem Inneren des Leuchtenmoduls anschließbar ist,
sowie ein Steckergehäuse (4) umfasst, welches mit der Platine (6) durch ein Vergussmaterial (18) verbunden ist und das Mittel zur Befestigung des Adaptersteckers (2) in der Öffnung des Leuchtenmoduls aufweist, wobei das Vergussmaterial (18) die Platine und die wenigstens eine Ader mit dem Steckergehäuse abdichtet,
wobei das Steckergehäuse (4) einen Einschubschlitz aufweist, in welchem die Platine (6) eingeschoben ist, **dadurch gekennzeichnet, dass** die Platine (6) und das Steckergehäuse (4) Rastmittel (16, 17) aufweisen, und die Platine (6) in dem Einschubschlitz des Steckergehäuses (4) vor einem Aufbringen des Vergussmaterials (18) eingerastet ist.

2. Elektrische Anschlussleitung nach Anspruch 1, wobei das Steckergehäuse einen Flansch (20) aufweist, welcher im am Leuchtenmodul montierten Zustand des Anschlusskabels an einem Umfang der Öffnung (12) des Leuchtenmoduls von einer Außen- oder Innenseite des Leuchtenmoduls anliegt.

3. Elektrisches Anschlusskabel nach einem der vorhergehenden Ansprüche, wobei der Adapterstecker (2) eine Dichtung (8) aufweist, welche den Adapterstecker (2) zu einer Innen- oder Außenseite des Leuchtenmoduls abdichtet, insbesondere bei Rückbezug auf Anspruch 2 einen O-Ring (8), welcher zwischen dem Flansch (20) und der Außen- oder Innenseite des Leuchtengehäuses liegt.

4. Elektrische Anschlussleitung nach einem der vorhergehenden Ansprüche, wobei die Mittel zur Befestigung des Adaptersteckers in der Öffnung Rastmittel (26) umfassen, welche in einem Bereich der Öffnung (22) des Leuchtenmoduls einrastbar sind.

5. Elektrische Anschlussleitung nach einem der vorhergehenden Ansprüche, wobei die wenigstens eine zweite Kontaktstelle (14) eine Anschlussklemme umfasst.

6. Elektrische Anschlussleitung nach einem der vorhergehenden Ansprüche, wobei die wenigstens eine erste Kontaktstelle (12) eine Lötstelle umfasst.

7. Elektrische Anschlussleitung nach einem der vorhergehenden Ansprüche, wobei an dem leuchtenentfernten Ende der elektrischen Leitung ein Stecker (30) zur Verbindung mit einem elektrischen Vorschaltgerät vorgesehen ist.

8. Elektrische Anschlussleitung nach Anspruch 7, wobei der Stecker (30) an dem leuchtenentfernten Ende durch Krimpen an der wenigstens einen Ader (10) der elektrischen Leitung (1) befestigt und elektrisch kontaktiert ist.

9. Leuchtenmodul umfassend eine elektrische Anschlussleitung nach einem der vorhergehenden Ansprüche sowie ein Modulgehäuse, welches eine Öffnung (22) aufweist, in welche der Adapterstecker montiert ist, und eine Platine (34), auf welcher Leuchtmittel angeordnet sind, wobei die Platine (34) mit den Leuchtmitteln elektrisch mit der wenigstens einen zweiten Kontaktstelle (14) des Adaptersteckers verbunden ist.

10. Leuchtenmodul nach Anspruch 9 wobei die Leuchtmittel eine oder mehrere LEDs umfassen.

11. Leuchtenmodul nach Anspruch 9 oder 10, wobei das Leuchtenmodul feuchtigkeits- und/oder gasdicht ist.

## Claims

1. An electrical connection cable for mounting in an opening (22) of a light module, the connection cable comprising
an electrical cable (1) having an end near the light and an end remote from the light; and
an adapter plug (2) at the end of the electrical cable near the light,
the adapter plug having a board (6) which has at least one first contact point (12) to which a wire (10) of the electrical cable is connected, and at least one second contact point (14) which is in electrical connection with the first contact point (12) via the board (6) and to which an electrical line in an interior of the light module can be connected,
as well as a plug housing (4) which is connected to the board (6) by a casting material (18) and which has means for fixing the adapter plug (2) in the opening of the light module, the casting material (18) sealing the board and the at least one wire to the plug housing,
the plug housing (4) having an insertion slot into which the board (6) is inserted, **characterized in that** the board (6) and the plug housing (4) have latching means (16, 17), and the board (6) is latched into the insertion slot of the plug housing (4) before the casting material (18) is applied.

2. Electrical connection cable according to claim 1, wherein the plug housing has a flange (20) which, when the connection cable is mounted on the light module, rests against a circumference of the opening (12) of the light module from an outside or inside of the light module.

3. Electrical connection cable according to one of the preceding claims, wherein the adapter plug (2) has a seal (8) which seals the adapter plug (2) to an inside or outside of the light module, in particular when pending on claim 2, an O-ring (8) which lies between the flange (20) and the outside or inside of the light module.

4. Electrical connecting cable according to one of the preceding claims, wherein the means for fastening the adapter plug in the opening comprise latching means (26) which can be latched in a region of the opening (22) of the light module.

5. Electrical connection cable according to one of the preceding claims, wherein the at least one second contact point (14) comprises a connecting terminal.

6. Electrical connection cable according to one of the preceding claims, wherein the at least one first contact point (12) comprises a soldering point.

7. Electrical connection cable according to one of the preceding claims, wherein a plug (30) for connection to an electrical ballast is provided at the end of the electrical line remote from the light.

8. Electrical connection cable according to claim 7, wherein the plug (30) is fastened at the end remote from the light by crimping on the at least one wire (10) of the electrical cable (1) and is electrically contacted.

9. Light module comprising an electrical connection cable according to one of the preceding claims as well as a module housing having an opening (22) in which the adapter plug is mounted and a printed circuit board (34) on which lighting means are arranged, wherein the printed circuit board (34) with the lighting means is electrically connected to the at least one second contact point (14) of the adapter plug.

10. Light module according to claim 9 wherein the lighting means comprise one or more LEDs.

11. Light module according to claim 9 or 10, wherein the light module is moisture- and/or gas-tight.

## Revendications

1. Câble de raccordement électrique pour le montage dans une ouverture (22) d'un module d'éclairage, dans lequel le câble de raccordement comprend :
un câble électrique (1) avec une extrémité proche du luminaire et une extrémité loin du luminaire ; et
un adaptateur (2) au niveau de l'extrémité proche du luminaire du câble électrique,
dans lequel l'adaptateur comprend une platine (6) qui comprend au moins un premier point de contact (12) au niveau de laquelle est raccordé un fil (10) du câble électrique et au moins un deuxième point de contact (14) qui est en liaison électrique avec le premier point de contact (12) par l'intermédiaire de la platine (6) et auquel un câble électrique peut être raccordé à l'intérieur du module d'éclairage,
ainsi qu'un boîtier de connecteur (4) qui est relié avec la platine (6) par un matériau de scellement (18) et qui comprend des moyens pour la fixation de l'adaptateur (2) dans l'ouverture du module d'éclairage, dans lequel le matériau de scellement (18) étanchéifie la platine et l'au moins un fil avec le boîtier de connecteur,
dans lequel le boîtier de connecteur (4) présente une fente d'insertion dans laquelle la platine (6) est insérée, **caractérisé en ce que** la platine (6) et le boîtier de connecteur (4) comprennent des moyens d'encliquetage (16, 17) et la platine (6) est encliquetée dans la fente d'insertion du boîtier de connecteur (4) avant une application du matériau de scellement (18).

2. Câble de raccordement électrique selon la revendication 1, dans lequel le boîtier de connecteur comprend une bride (20) qui, lorsque le câble de raccordement est monté sur le module d'éclairage, s'appuie contre une circonférence de l'ouverture (12) du module d'éclairage à partir d'un côté externe ou interne du module d'éclairage.

3. Câble de raccordement électrique selon l'une des revendications précédentes, dans lequel l'adaptateur (2) comprend un joint d'étanchéité (8) qui étanchéifie l'adaptateur (2) par rapport à un côté interne ou externe du module d'éclairage, plus particulièrement en référence à la revendication 2, un joint torique (8), qui se trouve entre la bride (20) et le côté externe ou interne du boîtier de luminaire.

4. Câble de raccordement électrique selon l'une des revendications précédentes, dans lequel les moyens de fixation de l'adaptateur dans l'ouverture comprennent des moyens d'encliquetage (26) qui peuvent être encliquetés dans une zone de l'ouverture (22) du module d'éclairage.

5. Câble de raccordement électrique selon l'une des revendications précédentes, dans lequel un deuxième point de contact (14) comprend une borne de raccordement.

6. Câble de raccordement électrique selon l'une des revendications précédentes, dans lequel l'au moins un premier point de contact (12) comprend un point de brasage.

7. Câble de raccordement électrique selon l'une des revendications précédentes, dans lequel, au niveau de l'extrémité loin du luminaire du câble électrique, est prévu un connecteur (30) pour la liaison avec un ballast électrique.

8. Câble de raccordement électrique selon la revendication 7, dans lequel le connecteur (30) est fixé et mis en contact électrique, au niveau de l'extrémité loin du luminaire, par sertissage, avec l'au moins un fil (10) du câble électrique (1).

9. Module d'éclairage comprenant un câble de raccordement électrique selon l'une des revendications précédentes ainsi qu'un boîtier de module qui comprend une ouverture (22) dans laquelle l'adaptateur est monté, et une platine (34) sur laquelle sont disposés des moyens d'éclairage, dans lequel la platine (34) est relié électriquement avec les moyens d'éclairage avec l'au moins un deuxième point de contact (14) de l'adaptateur.

10. Module d'éclairage selon la revendication 9, dans lequel les moyens d'éclairage comprennent une ou plusieurs LED.

11. Module d'éclairage selon la revendication 9 ou 10, dans lequel le module d'éclairage est étanche à l'humidité et/ou étanche aux gaz.
